# EUROPEAN PATENT SPECIFICATION

(11) **EP 2 786 014 B1**
(45) Date of publication and mention of the grant of the patent: **18.05.2016**
(21) Application number: 12706945.8
(22) Date of filing: 15.02.2012
(51) Int. Cl.: F03D 1/00

(54) **WIND TURBINE GENERATOR AND COMPONENT TRANSFERRING METHOD FOR THE SAME**
WINDKRAFTANLAGE UND KOMPONENTENÜBERTRAGUNGSVERFAHREN DAFÜR
GÉNÉRATEUR À ÉOLIENNE ET PROCÉDÉ DE TRANSFERT DE COMPOSANT POUR CELUI-CI

(30) Priority: 30.11.2011 WO PCT/JP2011/077626
(43) Date of publication of application: 08.10.2014
(73) Proprietor: Mitsubishi Heavy Industries, Ltd., Tokyo 108-8215 (JP)
(72) Inventor: ISHIMITSU, Keita, Tokyo 108-8215 (JP); KAMEDA, Takuro, Tokyo 108-8215 (JP); FURUKAWA, Syogo, Tokyo 108-8215 (JP); DUDEN, Heinrich, London, Greater London W1K 6WL (GB)
(74) Representative: Intès, Didier Gérard André
(86) International application number: PCT/JP2012/001004
(87) International publication number: WO 2013/080392

(56) References cited:
- EP-A1- 1 291 521
- EP-A1- 2 363 598
- CN-Y- 201 165 943
- DE-U1-202010 011 397
- US-A1- 2010 011 575

## Description

### Technical Field

The present invention relates to a wind turbine generator and a component transferring method for the wind turbine generator and specifically to a wind turbine generator provided with a component transferring path inside and a component transferring method for the wind turbine generator.

### Background Art

In recent years, from a perspective of preserving the environment, it is becoming popular to use a wind turbine generator which generates power from wind energy as renewable energy. The wind turbine generator, generally, includes a rotor having a plurality of blades mounted on a hub. The rotor is mounted in a nacelle placed atop a tower. The tower is installed upright on shore or off shore. In this type of wind turbine generator, the blades rotate upon receiving the wind and the rotation of the rotor is transmitted to a generator housed in the nacelle via a drive train. In this manner, electric power is generated by the generator.

The nacelle placed atop the tower houses a variety of components. During assembling of the wind turbine generator or performing maintenance, it is necessary to move those components. In a conventional case, components that are too heavy to be moved by humans are transferred using a crane installed on shore or a crane vessel. However, transferring the heavy components by the crane installed on shore or the crane vessel requires a lot of costs and time.

In view of this, proposed is a method of transferring a variety of components in the nacelle by using a crane equipped in the wind turbine generator, instead of the crane installed on shore or the crane vessel.

For instance, proposed in Patent Literature 1 is a method of transferring components through an exterior of the wind turbine generator between a vicinity of the nacelle and the ground by means of a crane assembly arranged through a hath formed in a top part of the nacelle, as well as a method of transferring components between an interior and an exterior of the nacelle through the hatch formed in the top part of the nacelle.

According to the method of Patent Literature 1, however, the components are transferred outside the wind turbine generator between the hatch formed in the top part of the nacelle and the ground and thus, the transferring operation is subjected to surrounding conditions such as wind conditions.

Thus, Patent Literature 2 proposes a method of transferring the components through an interior of the wind turbine generator. According to the method, a yaw drive is transferred using a support crane installed in proximity to the yaw drive and a winch mounted on a main shaft. Specifically, the yaw drive placed on a yaw deck is lifted by means of the support crane and translated to the winch located below the main shaft and above the top deck. The yaw drive is switched from the support crane to the winch and then, transferred to a foundation of the tower through a hatch formed in the top deck by means of the winch.

Further, Patent Literature 3 discloses to transfer heavy objects vertically through openings formed in each floor of the tower by means of a winch installed within the nacelle.

Furthermore, Patent Literature 4 discloses a method of transferring control devices between an interior and an exterior of the tower by means of a transferring rail provided in a lower part of the tower.

Disclosed in Patent Literature 5 is a method of transferring components between a cavity of the nacelle and a cavity of the hub by means of a rail.

### Citation List

### Patent Literature

PTL 1: US 2010/0021278 A
PTL 2: US 2010/0111665 A
PTL 3: CN 201165943 (Chinese Examined Utility Model Application Publication)
PTL 4: US 2010/0135792 A
PTL 5: US 2011/0211955 A

### Summary of Invention

### Technical Problem

To remove components arranged inside the nacelle from the tower through the opening of the lower part of the tower via the interior of the wind turbine generator, the components arranged inside the nacelle must be transferred to the interior of the tower first. However, the nacelle generally houses a main shaft, a drive train, a generator, a fan for ventilating the nacelle and the like and thus, the space in the nacelle is limited. Therefore, when moving the components from the interior of the nacelle to the interior of the tower, it is necessary to devise a path of moving the components using a component lifting and lowering mechanism such as a crane and a winch due to the restricted space in the nacelle.

However, a method of transferring the components inside the nacelle to the interior of the tower is not disclosed in details in Patent Literatures 1 through 5.

The transferring method described in Patent Literature is not for moving the variety of components inside the nacelle through the interior of the wind turbine generator. In the transferring method described in Patent Literature 2, it is unclear via which moving path the yaw drive placed on the yaw deck is transferred to the winch arranged below the main shaft. The transferring method of Patent Literature 3 is for moving the heavy objects vertically within the tower through the opening formed in each floor but not for moving the heavy objects between the interior of the nacelle and the interior of the tower. Further, the transferring method described in Patent Literature 4 is for transferring the control devices between the interior and the exterior of the tower in the lower part of the tower but not for transferring the components inside the nacelle to the interior of the tower. The transferring method described in Patent Literature 5 is for transferring the components between the cavity of the nacelle and the cavity of the hub and not for moving the components between the interior of the nacelle and the interior of the tower.

In view of the above issues, it is an object of the present invention is to provide a wind turbine generator and a component transferring method for the same, which is capable of efficiently transferring a transfer-object component between the interior of the nacelle and the interior of the tower.

### Solution to Problem

As one aspect of the present invention, a wind turbine generator may include, but is not limited to:
a blade;
a hub on which the blade is mounted;
a main shaft which is coupled to the hub;
a nacelle which houses at least the main shaft;
a tower which supports the nacelle via a yaw bearing; and
a component lifting and lowering mechanism which is installed in the nacelle, and
the nacelle may have a nacelle opening formed in a base plate of the nacelle in at least a part of an area surrounded by the yaw bearing and avoiding the main shaft, and the component lifting and lowering mechanism may transfer a transfer-object component between an interior of the nacelle and an interior of the tower via the nacelle opening while suspending the transfer-object component from above the main shaft.

Further, the component lifting and lowering mechanism may be, for instance, a traveling crane, a jib crane, a winch or the like.

According to the above wind turbine generator, the component lifting and lowering mechanism is configured to transfer the transfer-object component from above the main shaft while suspending the transfer-object component. Thus, the transferring operation can be further efficient by utilizing the space above the main shaft in the nacelle, which comparatively has room. Further, the opening (a nacelle opening) is formed in the nacelle base plate as a pathway of the transfer-object component. The opening is formed in at least a part of the area surrounded by the yaw bearing and avoiding the main shaft. By this, it is possible to avoid the obstruction of the transfer-object component by the main shaft during transferring of the transfer-object component between the interior of the nacelle and the interior of the tower.

The above wind turbine generator may further include a plurality of floors which are provided in the tower and each of which has a floor opening, and
the nacelle opening may include a first opening part and a second opening part which are arranged across a center axis of the yaw bearing,
the floor openings of the plurality of floors may overlap with each other at least in a portion corresponding to a prescribed angular range of a circular or annular area which is formed around the center axis by a moving path of the first opening part and the second opening part during turning of the nacelle, and
the component lifting and lowering mechanism may transfer the transfer-object component vertically in the tower via the floor openings while suspending the transfer-object component from above the main shaft.

In the case of moving the transfer-object component vertically in the tower using the component lifting and lowering mechanism installed in the nacelle, it is desirable to match a position of the nacelle opening with a position of the floor opening of each floor by rotating the nacelle as needed in advance. In this aspect, by forming the nacelle opening in the nacelle base plate, which includes the first and second opening parts on both sides across the center axis of the yaw bearing, the angular range of the nacelle where the nacelle opening and the floor openings overlap increases. Further, the floor openings of the plurality of floors overlap with each other at least in the portion corresponding to the prescribed angular range of the circular or annular area which is formed around the center axis by the moving path of the first opening part and the second opening part during turning of the nacelle. Thus, the angular range where the nacelle opening matches with the floor opening of each floor is further increased.

Therefore, it is now possible to significantly reduce a rotation amount of the nacelle required to position the nacelle opening to overlap the floor opening of each floor. As this increases the chance of the position of the nacelle opening matching with the position of the floor opening of each floor even before turning the nacelle, this increases the chance of skipping the turning of the nacelle.

The above wind turbine generator may further include:
a hydraulic pump which is housed in the nacelle and which is driven by the main shaft to produce pressure oil;
a plurality of hydraulic motors which are housed in the nacelle and which are driven by the pressure oil; and
a generator which is driven by the hydraulic motors, and
the nacelle opening may be large enough to allow at least each of the hydraulic motors to pass through.

With limited space inside the nacelle, it is difficult to increase the size of the nacelle opening formed in the nacelle base plate excessively. Thus, by providing a plurality of the hydraulic motors and making each hydraulic motor smaller, it is possible to secure enough size of the nacelle opening for the hydraulic motor, which requires frequent maintenance and replacement, to pass through, without excessively increasing the size of the nacelle. In contrast, the hydraulic pump, which also requires maintenance and replacement as frequently as the hydraulic motor, may be configured separable into a plurality of segments so that each of the segments can pass through the nacelle opening.

The above wind turbine generator may further include:
a hydraulic pump which is housed in the nacelle and which is driven by the main shaft to produce pressure oil;
a plurality of hydraulic motors which are housed in the nacelle and which are driven by the pressure oil;
a generator which is driven by the hydraulic motors; and
an oil pan floor which is provided in the tower and which has an oil pan opening, the oil pan opening being closable,
and the oil pan opening may be provided in a projected part of the oil pan floor.

As the oil pan opening is closable, by keeping the oil pan opening closed except for to transfer the component in the interior of the tower, even when the operating oil circulating through the hydraulic pump and the hydraulic motor leaks, the leaked operating oil can be captured at the oil pan floor. Further by proving the oil pan opening in the projected part of the oil pan floor, it is less likely that the leaked operating oil accumulates on the closed part of the oil pan opening. Thus, when releasing the oil pan opening during transferring the transfer-object component, it is possible to prevent the leaked operating oil on the closed part of the oil pan opening from falling to the floors located below via the oil pan opening.

In the above wind turbine generator,
the nacelle opening may include a first opening part and a second opening part which are arranged across a center axis of the yaw bearing,
the oil pan opening may be arranged at least in a portion corresponding to a prescribed angular range of a circular or annular area which is formed around the center axis by a moving path of the first opening part and the second opening part during turning of the nacelle, and
the component lifting and lowering mechanism may transfer the transfer-object component vertically in the tower via the oil pan opening while suspending the transfer-object component from above the main shaft.

In the case of moving the transfer-object component vertically in the tower using the component lifting and lowering mechanism installed in the nacelle, it is desirable to match a position of the nacelle opening with a position of the oil pan opening by rotating the nacelle as needed in advance. In this aspect, by forming the nacelle opening in the nacelle base plate, which includes the first and second opening parts on both sides of the center axis of the yaw bearing (a nacelle rotation center), the angular range of the nacelle where the nacelle opening and the oil pan opening overlap increases. Further, the oil pan opening is formed at least in the portion corresponding to a prescribed angular range of a circular or annular area which is formed around the center axis by a moving path of the nacelle opening (the first opening part and the second opening part during turning of the nacelle. Thus, the angular range where the nacelle opening matches with the oil pan opening is further increased.

Therefore, it is now possible to significantly reduce a rotation amount of the nacelle required to position the nacelle opening to overlap the oil pan opening. As this increases the chance of the position of the nacelle opening already matching with the position of the oil pan opening even before turning the nacelle, this increases the chance of skipping the turning of the nacelle.

As another aspect of the present invention, a component transferring method for a wind turbine generator which comprises a blade, a hub on which the blade is mounted, a main shaft which is coupled to the hub, a nacelle which houses at least the main shaft, and a tower which supports the nacelle via a yaw bearing, may include, but is not limited to:
a first transferring step of transferring a transfer-object component between an interior of the nacelle and an interior of the tower by a component lifting and lowering mechanism via a nacelle opening while being suspended from above the main shaft by the component lifting and lowering mechanism, the nacelle opening being formed in a base plate of the nacelle in at least a part of an area surrounded by the yaw bearing and avoiding the main shaft, the component lifting and lowering mechanism being installed in the nacelle.

According to the component transferring method for the wind turbine generator, the component lifting and lowering mechanism is configured to transfer the transfer-object component from above the main shaft while suspending the transfer-object component. Thus, the transferring operation can be further efficient by utilizing the space above the main shaft 6 in the nacelle, which comparatively has room. Further, the opening (the nacelle opening) is formed in the nacelle base plate as a pathway of the transfer-object component. The opening is formed in at least a part of the area surrounded by the yaw bearing and avoiding the main shaft. By this, it is possible to avoid the obstruction of the transfer-object component by the main shaft during transferring of the transfer-object component between the interior of the nacelle and the interior of the tower.

The above component transferring method for the wind turbine generator, may further include a second transferring step of transferring the transfer-object component vertically in the tower, and
the nacelle opening may include a first opening part and a second opening part which are arranged across a center axis of the yaw bearing,
a plurality of floors may be provided in the tower and each of the floors may have a floor opening,
the floor openings of the plurality of floors may overlap with each other at least in a portion corresponding to a prescribed angular range of a circular or annular area which is formed around the center axis by a moving path of the first opening part and the second opening part during turning of the nacelle, and
in the second transferring step, the transfer-object component may be transferred by the component lifting and lowering mechanism vertically in the tower via the floor openings while being suspended from above the main shaft by the component lifting and lowering mechanism.

In the case of moving the transfer-object component vertically in the tower using the component lifting and lowering mechanism installed in the nacelle, it is desirable to match a position of the nacelle opening with a position of the floor opening of each floor by rotating the nacelle as needed in advance. In this aspect, by forming the nacelle opening in the nacelle base plate, which includes the first and second opening parts on both sides across the center axis of the yaw bearing, the angular range of the nacelle where the nacelle opening and the floor openings overlap increases. Further, the floor openings of the plurality of floors overlap with each other at least in the portion corresponding to the prescribed angular range of the circular or annular area which is formed around the center axis by the moving path of the first opening part and the second opening part during turning of the nacelle. Thus, the angular range where the nacelle opening matches with the floor opening of each floor is further increased.

Therefore, it is now possible to significantly reduce a rotation amount of the nacelle required to position the nacelle opening to overlap the floor opening of each floor. As this increases the chance of the position of the nacelle opening matching with the position of the floor opening of each floor even before turning the nacelle, this increases the chance of skipping the turning of the nacelle.

The above component transferring method for the wind turbine generator may further include a third transferring step of transferring the transfer-object component between an interior of the hub and the interior of the nacelle. For instance, the transfer-object component may be transferred between the interior of the hub and the interior of the nacelle via a first manhole formed in the hub, a space between the hub and a hub cover covering the hub and a second manhole formed in a wall of the nacelle.

In this manner, the transfer-object component arranged in the hub is transferred in and out through the interior of the nacelle. By this, the component can be transferred, in the manner similar to transferring the component arranged inside the nacelle, between the interior of the nacelle and the interior of the tower via the nacelle opening formed in the nacelle base plate using the component lifting and lowering mechanism installed inside the nacelle

Further, in the case of transferring the transfer-object component between the interior of the hub and the interior of the nacelle via the first manhole formed in the hub, the space between the hub and a hub cover covering the hub and the second manhole, the component transferring method for the wind turbine generator may further include a step of installing a rail for transportation from the interior of the hub to the interior of the nacelle via the space so as to pass through the first manhole and the second manhole, and
the transfer-object component may be transferred between the interior of the hub and the interior of the nacelle using the rail for transportation.

By this, the transfer-object component that are too heavy to be moved by humans can be transferred easily between the interior of the hub and the interior of the nacelle by using the rail for transportation.

The above component transferring method for the wind turbine generator may further include:
a second transferring step of transferring the transfer-object component vertically in the tower;
a step of temporarily placing the transfer-object component on a temporary placement floor which is provided in the tower; and
a step of translating the transfer-object component between the component lifting and lowering mechanism installed in the nacelle and another component lifting and lowering mechanism installed in a space inside the tower above the temporary placement floor while temporarily placing the transfer-object component on the temporary placement floor, and
in the second transferring step, the transfer-object component may be transferred by the component lifting and lowering mechanism installed in the nacelle above the temporary placement floor and is transferred by the other component lifting and lowering mechanism below the temporary placement floor.

Due to the trend of larger wind turbines, the tower tends to increase its height as well.

Thus, it is desirable to shorten the time required to transfer components inside the tower. From this perspective, the transfer-object component is temporarily placed on the temporary placement floor provided in the tower and the transfer-object component is then translated between the component lifting and lowering mechanism installed in the nacelle and the other component lifting and lowering mechanism arranged in the space inside the tower above the temporary placement floor. By this, it is possible to shorten the time required to transfer the transfer-object component in the tower.

Further, in the above component transferring method for the wind turbine generator, the temporary placement floor may be a transformer floor where a transformer is installed, and another component lifting and lowering mechanism is used to transfer a transformer coil of the transformer.

As the transformer coil is heavy, the transformer coil is normally moved by the component lifting and lowering mechanism such as a traveling crane and a jib crane, instead of by humans. The transfer operation of the transformer coil with respect to the transformer inevitably includes a horizontal movement of the transformer coil. More specifically, in the process of removing the transformer coil using the component lifting and lowering mechanism, the transformer coil must be hoisted from the transformer casing and then to moved horizontally to the opening of the transformer floor. In contrast, in the process of installing the transformer coil, the transformer coil must be moved horizontally from the opening of the transformer floor to atop the transformer casing and then lowered into the transformer casing. It is difficult to perform the removing and installing operations of the transformer coil including the horizontal movement by using the component lifting and lowering mechanism installed inside the nacelle which is far above the transformer floor and thus, it is desirable to provide the other component lifting and lowering mechanism for transferring the transformer coil, besides the component lifting and lowering mechanism installed inside the nacelle.

Therefore, by providing the component lifting and lowering mechanism for transferring the transformer coil (the other component lifting and lowering mechanism), it is now possible to easily perform the removing and installing of the transformer coil. Further, by utilizing the transformer floor as the temporary placement floor, the transfer-object component can be moved promptly using the component lifting and lowering mechanism for transferring the transferring the transformer coil.

In the case of using the other component lifting and lowering mechanism to transfer the transformer coil, the above component transferring method for the wind turbine generator may further include:
a step of transferring the transformer coil between atop the transformer floor and an interior of a transformer casing while suspending the transformer coil by said another component lifting and lowering mechanism;
a step of adjusting an orientation of the transformer coil over the transformer floor; and
a step of transferring the transformer coil between atop the transformer floor and a bottom part of the tower while suspending the transformer coil by the other component lifting and lowering mechanism.

Such an orientation of the transformer coil as to easily pass through the opening of the transformer floor does not always coincide with such an orientation of the transformer as to be housed easily in the transformer casing. Thus, as described above, by adjusting the orientation of the transformer coil over the transformer floor, it is possible to perform the removing and installing operations of the transformer coil easily.

The above component transferring method for the wind turbine generator may further include a fourth transferring step of transferring the transfer-object component between the interior of the tower and an exterior of the tower via a tower opening which is formed on a bottom part of the tower. More specifically, in the fourth transferring step, the transfer-object component may be transferred using a rail for transportation extending from the interior of the tower to the exterior of the tower via the tower opening.

### Advantageous Effects of Invention

According to the present invention, the component lifting and lowering mechanism is configured to transfer the transfer-object component from above the main shaft while suspending the transfer-object component. Thus, the transferring operation can be further efficient by utilizing the space above the main shaft in the nacelle, which comparatively has room. Further, the opening (a nacelle opening) is formed in the nacelle base plate as a pathway of the transfer-object component. The opening is formed in at least a part of the area surrounded by the yaw bearing and avoiding the main shaft. By this, it is possible to avoid the obstruction of the transfer-object component by the main shaft during transferring of the transfer-object component between the interior of the nacelle and the interior of the tower.

### Brief Description of Drawings

[fig.1]FIG.1 is a schematic view of a general structure of a wind turbine generator.
[fig.2A]FIG.2A is an oblique perspective view of an exemplary structure around a nacelle of the wind turbine generator.
[fig.2B]FIG.2B is a plane view of the exemplary structure around the nacelle of the wind turbine generator.
[fig.2C]FIG.2C is a side view of the exemplary structure around the nacelle of the wind turbine generator.
[fig.3]FIG.3 shows diagrams showing relationships between a nacelle opening and a floor opening and showing a view of a base plate of the nacelle taken from below and a view of each floor taken from above.
[fig.4]FIG.4 is an oblique perspective view showing an exemplary structure of an oil pan floor.
[fig.5]FIG.5 illustrates a process of transferring a transformer coil to an exterior of the tower by means of a component lifting and lowering mechanism disposed above a transformer floor.
[fig.6]FIG.6 illustrates a process of transferring the transfer-object component inside the nacelle to the exterior of the tower via an interior of the tower.
[fig.7]FIG.7 illustrates a process of transferring an actuator provided inside the hub for driving a pitch to the interior of the nacelle.

### Description of Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

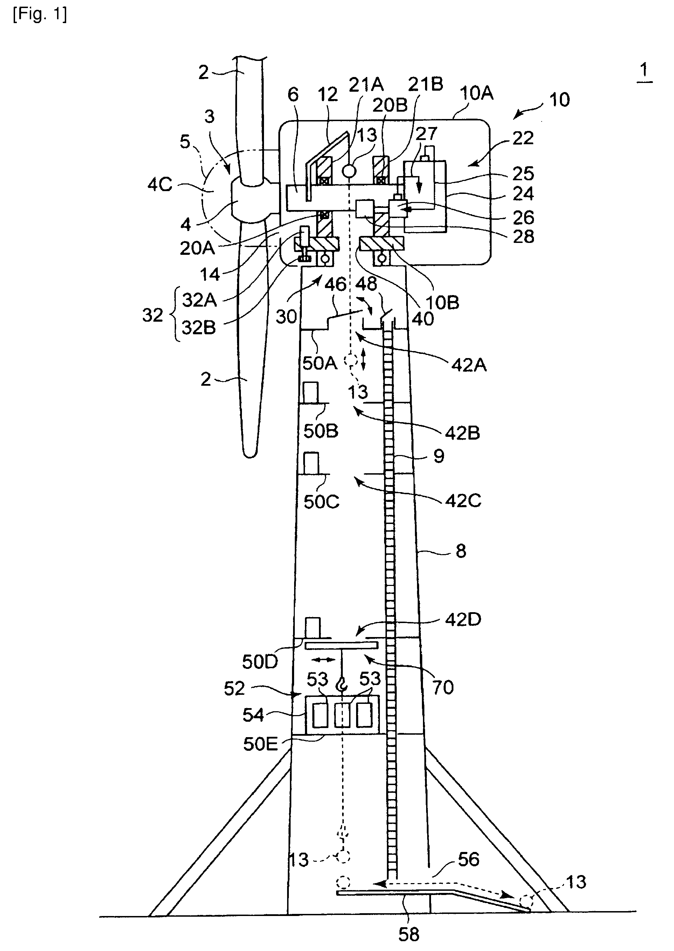

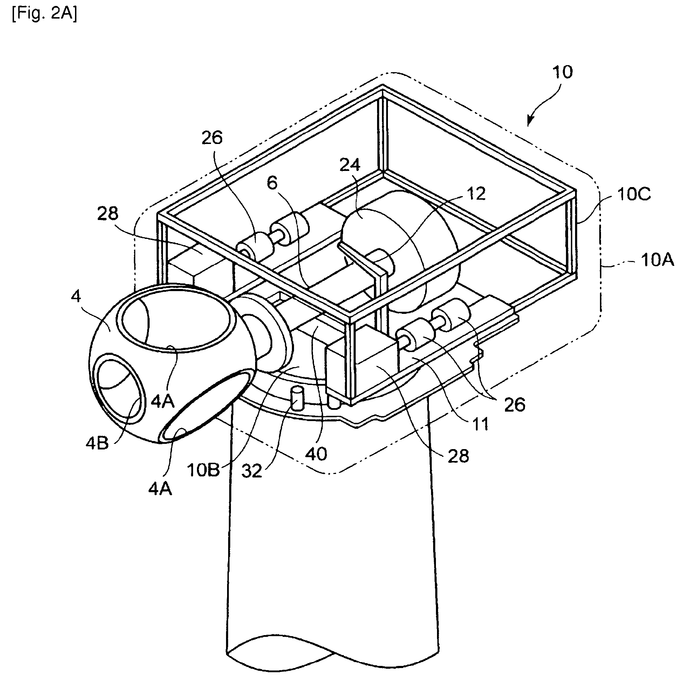

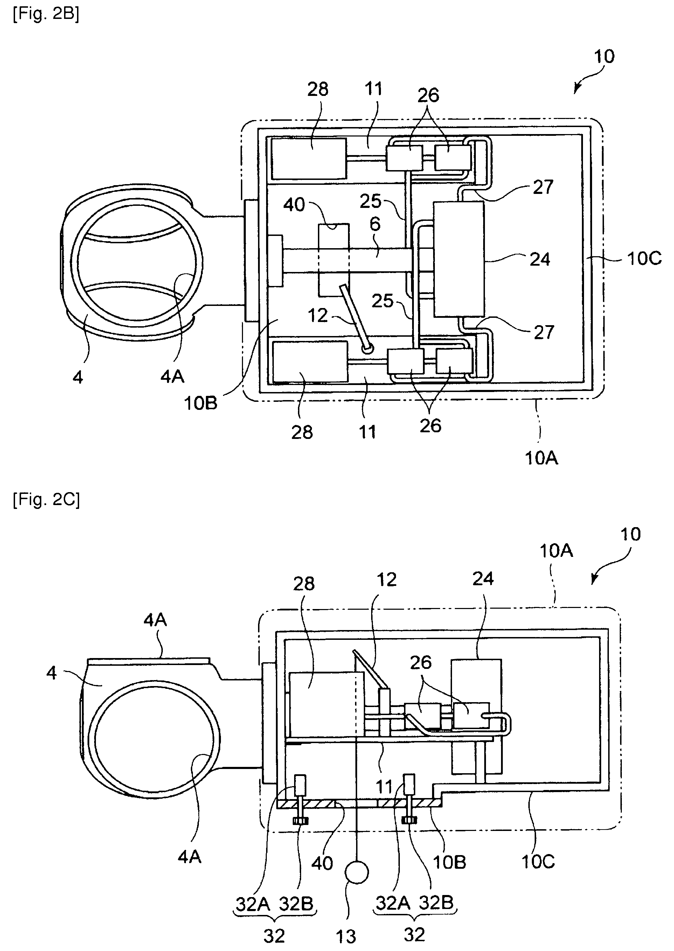

FIG.1 is a schematic view of a general structure of a wind turbine generator. FIG.2A is an oblique perspective view of an exemplary structure around a nacelle of the wind turbine generator. FIG.2B is a plane view of the exemplary structure around the nacelle of the wind turbine generator. FIG.2C is a side view of the exemplary structure around the nacelle of the wind turbine generator.

FIG.1 shows a wind turbine generator 1 provided with a rotor 3 formed by blades 2 and a hub 4, a main shaft 6 coupled to the hub 4 of the rotor 3, a nacelle 10 arranged on a tower 8, and a component lifting and lowering mechanism 12 installed in the nacelle 10.

The rotor 3 is integrally formed by the blades 2 and the hub 4 which are connected by connecting a blade root of the blade 2 to a blade attaching hole 4A of the hub 4 (see FIG.2A to FIG.2C). In a front end part of the hub (opposite to an end part to which the main shaft 6 is connected), a first manhole 4B is formed besides the blade attaching holes 4A. For instance, for the purpose of performing maintenance/replacement of devices housed in the hub 4, a maintenance operator can access the interior of the hub 4 via the first manhole 4B. The hub 4 is covered by a hub cover 5 (see FIG.1) and thus, between the first manhole 4B of the hub 4 and a second manhole 14 formed in a wall of the nacelle 10, i.e. a wall of a nacelle cover 10A, the maintenance operator can move safely through a space 4C between the hub 4 and the hub cover 5.

The main shaft 6 connected to the hub 4, is supported rotatably by the nacelle 10 via a pair of main shaft bearings 20A and 20B (see Fig.1). More specifically, bearing housings 21A and 21B of the pair of the main shaft bearings 20A and 20B are provided on a base plate 10B of the nacelle 10 to support the main shaft 6 by the nacelle 10.

Rotation of the main shaft 6 is increased by a hydraulic transmission 22 and inputted to a generator 28. By this, rotation energy of the rotor produced upon receiving the wind by the blade 2, is transmitted to the generator 28 via the hydraulic transmission 22 to generate power in the generator 28.

As shown in FIG.1, the hydraulic transmission 22 is constituted by a hydraulic pump 24 coupled to the main shaft 6 and a hydraulic motor connected to the generator 28.

The hydraulic pump 24 is driven by the main shaft 6 and increases a pressure of operating oil so as to produce high-pressure operating oil (pressure oil). An outlet of the hydraulic pump 24 is connected to an inlet of the hydraulic motor 26 via a high-pressure oil line 25. Thus, the pressure oil produced in the hydraulic pump 24 is supplied to the hydraulic motor 26 via the high-pressure oil line 25 and the hydraulic motor 26 is driven by the produced pressure oil. The pressure oil having worked in the hydraulic motor 26 becomes low-pressure operating oil. The low-pressure operating oil then returns to the hydraulic pump 24 via a low-pressure oil line 27 provided between the outlet of the hydraulic motor 26 and the inlet of the hydraulic pump 24. An output shaft of the hydraulic motor 26 is connected to the generator 28 to input the rotation of the hydraulic motor 26 to the generator.

The hydraulic pump 24 and the hydraulic motor 26 may respectively have variable displacement. For instance, from the perspective of improving operation efficiency, the displacement of the hydraulic pump 24 may be adjusted so that the rotation speed of the rotor 3 becomes a value appropriate for the wind speed and the displacement of the hydraulic motor 26 may be adjusted so that the rotation speed of the generator becomes constant.

The hydraulic pump 24, the hydraulic motor 26 and the generator 28 may be housed in the nacelle 10 as shown in FIG.2A to FIG.2C.

In the exemplary configuration shown in FIG.2A to FIG.2C, the hydraulic motors 26 and the generators 28 are provided on both sides of the main shaft 6 and the hydraulic pump 24 connected to the main shaft 6 within the nacelle 10. More specifically, on both sides of the main shaft 6 and the hydraulic pump 24, a pair of device installation plates 11 are provided and on each of the device installation plates 11, a pair of hydraulic motors 26 and a generator 28 are installed. The device installation plate 11 is formed integrally with a nacelle structure 10C installed to the base plate 10B of the nacelle 10.

The nacelle 10 is configured such that the nacelle base plate 10B and the nacelle structure 10C are covered by the nacelle cover 10A. The nacelle base plate 10B is supported by the tower via a yaw bearing 30 (see Fig.1). More specifically, the nacelle base plate 10B is fixed to one of an inner ring and an outer ring of the yaw bearing 30 and an upper end of the tower 8 is fixed to the other of the inner ring and the outer ring of the yaw bearing 30.

The nacelle 10 supported atop the tower via the yaw bearing 30 is rotated by a yaw mechanism 32 fixed to the nacelle base plate 10B. The yaw mechanism 32 is formed by a yaw motor 32A and a pinion gear 32B attached to the yaw motor 32A. A ring gear (not shown) is provided in the tower 8 so that the ring gear meshes with the pinion gear 32B. Therefore, when the yaw motor 32A rotates the pinion gear 32B, the nacelle base plate 10B rotates with respect to the tower 8.

FIG.1 and FIG.2A through FIG.2C show the exemplary cases where the yaw mechanism 23 is fixed to the nacelle base plate 10B. However, this is not limitative and the yaw mechanism 32 may be attached to the tower 8. In such case, the pinion gear 32B of the yaw mechanism 32 meshes with the ring gear provided on the nacelle base plate 10B.

Inside the nacelle 10, the component lifting and lowering mechanism 12 is provided. The component lifting and lowering mechanism 12 transfers the transfer-object component 13 between the interior of the nacelle 10 and the interior of the tower 8 via a nacelle opening 40 formed in the nacelle base plate 10B while suspending the transfer-object component from above the main shaft 6. The nacelle opening 40 is described later in details.

The component lifting and lowering mechanism 12 may be foldable or may be permanently installed in the nacelle 10.

As the component lifting and lowering mechanism 12, an overhead traveling crane which travels on a runaway installed in proximity to a ceiling of the nacelle 10, a jib crane having a jib for hoisting a cargo, a winch for suspending a cargo by a wire rope winded around a drum, may be used for instance. Particularly, the overhead traveling crane or the jib crane is capable of moving the transfer-object component 13 not only vertically but also horizontally inside the nacelle 10 and thus, these cranes are preferable as the component lifting and lowering mechanism 12.

In FIG.2A to FIG.2C, the jib crane installed on the device installation plate 11 is used as the component lifting and lowering mechanism 12. However, the location of the component lifting and lowering mechanism 12 is not limited to this and the component lifting and lowering mechanism 12 may be installed in other places such as in the space inside the nacelle 10 behind the hydraulic pump 24.

Inside the tower 8, a plurality of floors 50A to 50E are provided. A topmost floor 50A is an oil pan floor which receives the operating oil of the hydraulic transmission 22. Below the floor 50A, provided are the floors 50B to 50D on which an oil tank for storing the operating oil, an uninterruptible power supply for supply power to a variety of devices such as the hydraulic pump 24, the hydraulic motor 26 and the actuator for pitch control, a fan for cooling the interior of the tower 8, a residential facility for the maintenance operators, or the like are installed respectively. The floor 50E is a transformer floor where a transformer is provided.

The floors 50A to 50E have floor openings 42A to 42E respectively so that the transfer-object component 13 can pass through.

The tower 8 is also provided with a ladder 9 inside so that the maintenance operators can move between the floors 50A to 50E. In addition to the ladder 9, an elevator may be provided in the tower 8. In the case of installing the elevator in the tower 8, light components among the transfer-object components 13 may be transferred using the elevator in the tower 8, instead of using the component lifting and lowering mechanism 12.

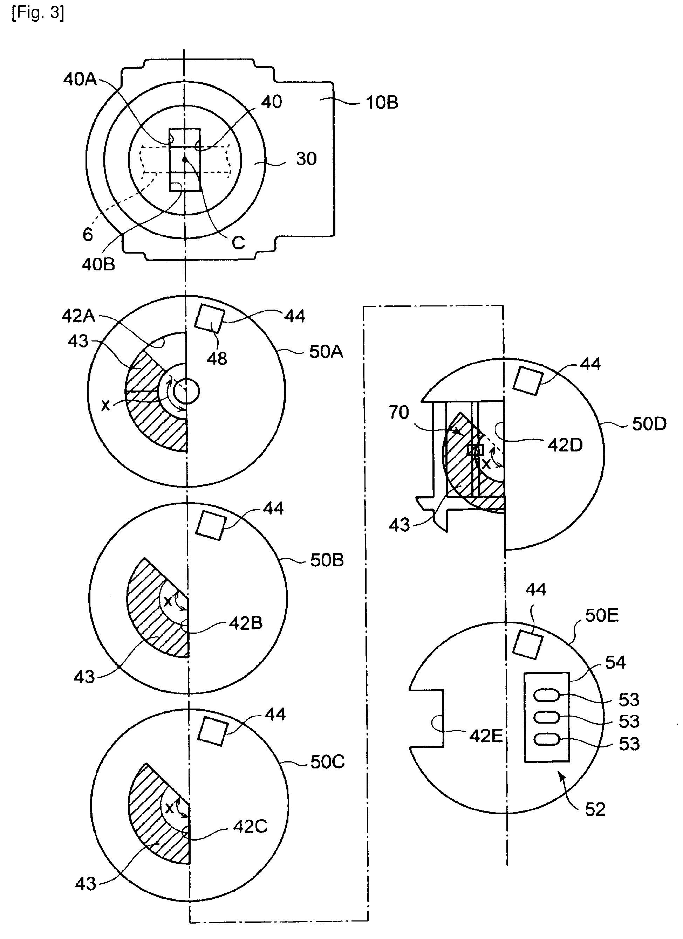

FIG.3 shows diagrams showing relationships between the nacelle opening 40 and the floor opening 42 and showing a view of the nacelle base plate 10B taken from below and a view of each of the floors 50A to 50E taken from above. FIG.3 also shows openings 44 through which the ladder 9 is provided.

As shown in FIG.3, the nacelle opening 40 is formed in the nacelle base plate 10B in at least a part of an area surrounded by the yaw bearing 30 and avoiding the main shaft 6.

More specifically, the nacelle opening 40 is formed in at least a portion where the main shaft is not provided, of a circular area of the nacelle base plate 10B surrounded by the yaw bearing 30. By this, the transfer-object component 13 can be moved easily by the component lifting and lowering mechanism 12 between the interior of the nacelle 10 and the interior of the tower 8 through the nacelle opening 40 while avoiding obstruction by the main shaft 6.

The nacelle opening 40 may not be formed entirely in the area avoiding the main shaft. For instance, as shown in FIG.3, the nacelle opening 40 may be formed in an area which partially avoids the main shaft.

In an embodiment of the present invention, to facilitate transfer of the transfer-object component 13 inside the tower 8 via the floor openings 42 by the component lifting and lowering mechanism 12 arranged in the nacelle 10, the following relationships are established between the nacelle opening 40 and the floor openings 42.

First, the floor opening 40 includes a first opening part 40A and a second opening part 40B which are arranged across a center axis C of the yaw bearing 30 (a rotation center of the nacelle) on both sides of the main shaft 6. The first opening part 40A and the second opening part 40B may be interconnected to form one nacelle opening 40 as shown in Fig.3. Further, the first opening part 40A and the second opening part 40B preferably have substantially the same shape.

Secondly, the floor openings 42A to 42D of the floors 50A to 50D respectively overlap with each other in a meshed portion 43. The meshed portion 43 corresponds to a X-angle range of an annular area which is formed around the center axis C by a moving path of the first opening part 40A and the second opening part 40B during turning of the nacelle 10. From the perspective of enhancing efficiency of transferring the transfer-object component 13 within the tower 8 and securing enough space for installing devices and facilities on each of the floors 50A to 50D, the angle X is preferably set in a range of 90 degrees to 200 degrees, more preferably in a range of 120 degrees to 180 degrees.

In this manner, by forming the nacelle opening 40 in the nacelle base plate 10B, which includes the first and second opening parts 40A and 40B on both sides of the main shaft 6 across the center axis C of the yaw bearing 30, the angular range of the nacelle 10 where the nacelle opening 40 and the floor openings 42A to 42D overlap roughly doubles. Further, in the portion 43 corresponding to the X-angle range of the area formed by the moving path of the nacelle opening 40 (the first opening part 40A and the second opening part 40B) during the turning of the nacelle 10, the floor openings 42A to 42D overlap with each other. Thus, the angular range where each of the opening parts 40A and 40B matches with the floor openings 42A to 42D is further increased.

Therefore, it is now possible to significantly reduce a rotation amount of the nacelle required to position the nacelle opening 10 to overlap the floor openings 42A to 42D of the floors 50A to 50D. As this increases the chance of the position of the nacelle opening 10 matching with the positions of the floor openings 42A to 42D of the floors 50A to 50D even before turning of the nacelle 10, it becomes more frequent to skip the turning of the nacelle 10.

The floor opening (the oil pan opening) 42A of the oil pan floor 50A may be closeable by a flap member 46 to prevent the operating oil having leaked from the hydraulic transmission 22 from falling to the floors 50B to 50E.

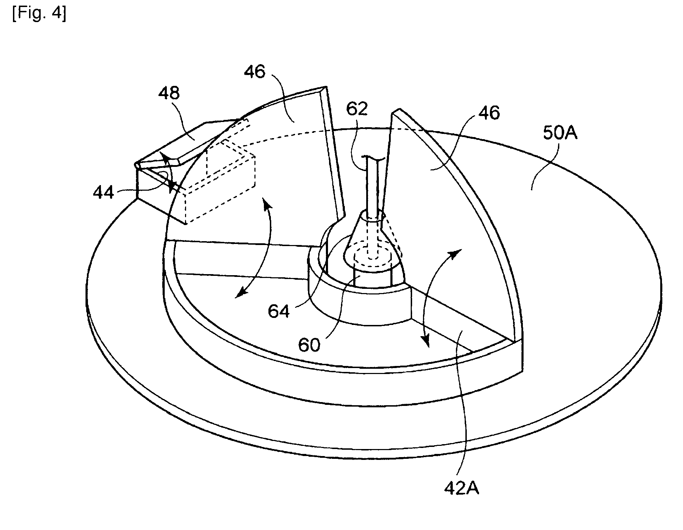

FIG.4 is an oblique perspective view showing an exemplary structure of the oil pan floor 50A. As shown in FIG.4, the oil pan opening 42A and the opening 44 for the ladder are provided in a projected part of the oil pan floor 50A and are closeable by the flap members 46 and 48 respectively. By this, by normally closing the oil pan opening 42A and the opening 44 for the ladder by the flap members 46 and 48, even when the operating oil leaks from the hydraulic transmission 22, the leaked operating oil can be received at the oil pan floor 50A. Further by proving the oil pan opening 42A and the opening 44 for the ladder in the projected part of the oil pan floor 50A, it is less likely that the leaked operating oil accumulates on the flap members 46 and 48. Thus, when releasing the oil pan opening 42A and the opening 44 for the ladder by lifting the flap members 46 and 48, it is possible to prevent the leaked operating oil accumulating on the flap members 46 and 48 from falling to the floors 50B to 50E located below via the oil pan opening 42A and the opening 44 for the ladder.

With the oil pan opening 42A and the opening 44 for the ladder being closed, the flap members 46 and 48 are designed to incline with respect to the horizontal direction so that it is difficult for the leaked operating oil to remain on the flap members 46 and 48.

As shown in FIG.4, on the oil pan floor 50A, provided are a cylindrical member 60 through which floor penetrating members 62 such as a power cable or pipes penetrate, and a covering member 64 of a cone shape for covering the cylindrical member 60. By this, even when the operating oil leaks from the hydraulic transmission 22, the leaked operating oil falls down along the covering member 64 to the oil pan floor 50A. In this manner, it is possible to prevent the leaked operating oil from falling through a gap between the floor penetrating member 62 and the cylindrical member 60 to the lower floors 50B to 50E.

On the transformer floor 50E shown in FIG. 1, a transformer (a three-phase transformer) 52 having a plurality of transformer coils 53 stored in a casing 54 is provided. The transformer 52 may be any type of transformer such as a molded transformer, an oil-impregnated transformer and a gas-insulated transformer.

In a space above the transformer floor 50E inside the tower 8, another component lifting and lowering mechanism 70 is provided to transfer the transformer coil 53. For instance, the other component lifting and lowering mechanism 70 may be provided on a bottom surface of the floor 50D constituting a tier immediately above the transformer floor 50E. The other component lifting and lowering mechanism 70 may be a traveling crane or a jib crane.

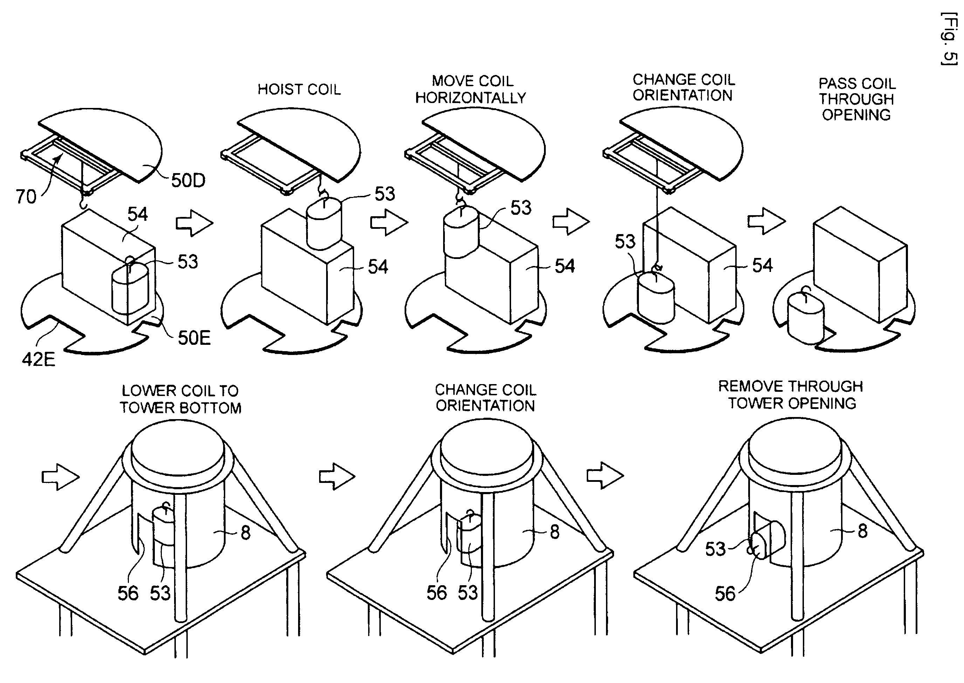

FIG.5 illustrates a process of transferring the transformer coil 53 to the exterior of the tower 8 using the other component lifting and lowering mechanism 70.

As shown in FIG.5, the transformer coil 53 is first lifted by the other component lifting and lowering mechanism 70 and removed from the casing 54. Then, the transformer coil 53 is moved horizontally by the other component lifting and lowering mechanism 70 and placed temporarily on the transformer floor 50E. Next, to make it easier for the transformer coil 53 to pass through the floor opening 42E, an orientation of the transformer coil 53 is changed by 90 degrees. The transformer coil 53 is lifted again by the other component lifting and lowering mechanism 70 and transferred to a bottom part of the tower 8 via the floor opening 42E. Once reaching the bottom part of the tower, the transformer coil 53 is turned such that the orientation is changed to make it easier for the transformer coil 53 to pass through the tower opening 56 formed at the bottom part of the tower 8. Finally, the transformer coil 53 is brought out of the tower 8 via the tower opening 56. In this process, the transformer coil 53 may be transferred to the exterior of the tower 8 by means of a rail for transportation (a transportation rail) 58 (see FIG. 1) which extends between the interior of the tower to the exterior of the tower so as to pass through the tower opening 56.

The transformer coil 53 can be installed into the casing 54 in a sequence opposite to the sequence shown in FIG.5.

Next, the component transferring method for transferring the transfer-object component 13 is explained below.

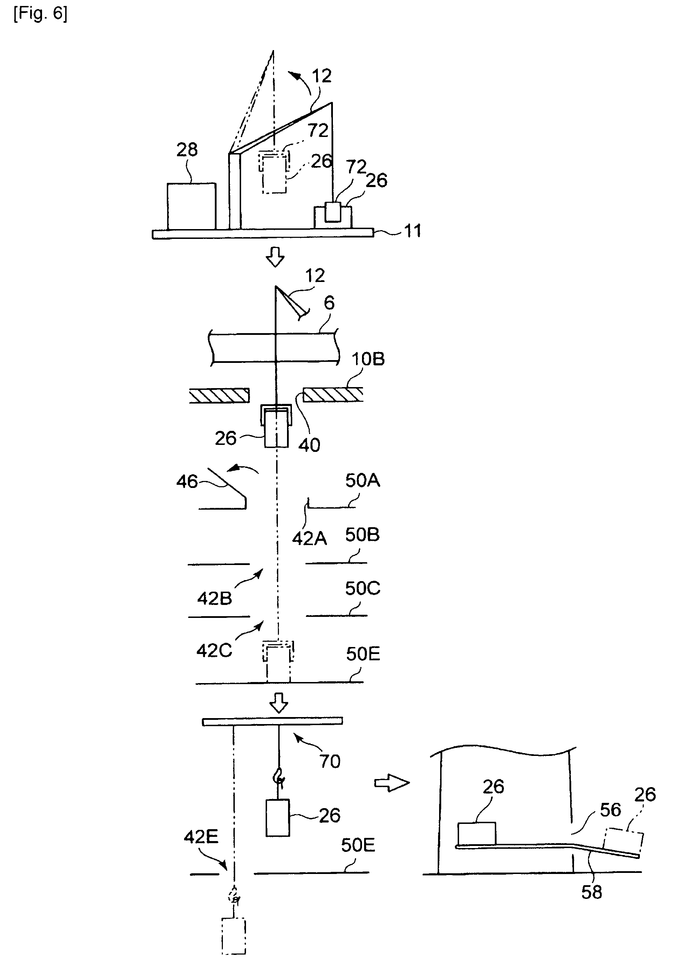

FIG.6 illustrates a process of transferring the transfer-object component 13 inside the nacelle 10 to the exterior of the tower 8 via the interior of the tower 8. In the exemplary case, the transfer-object component 13 is the hydraulic motor 26 arranged inside the nacelle 10

As shown in FIG.6, the component lifting and lowering mechanism 12 installed on the device installation plate 11 lifts the hydraulic motor 26 installed on the device installation plate 11 inside the nacelle 10. In this process, the component lifting and lowering mechanism 12 hoists the hydraulic motor 26 by means of a jig 72 and while suspending the hydraulic motor 26 by the jig 72, the attitude of the hydraulic motor 26 may be adjusted. For instance, in such a case that the hydraulic motor 26 has substantially a cylindrical shape and is mounted on the device installation plate 11. with its axial center being horizontal, the attitude of the hydraulic motor 26 may be adjusted so that the axial center of the hydraulic motor 26 becomes vertical while the hydraulic motor 26 is suspended by the jig 72. By this, the hydraulic motor 26 can pass through the nacelle opening 40 easily.

Next, the component lifting and lowering mechanism 12 transfers the hydraulic motor 26 between the interior of the nacelle 10 and the exterior of the tower 8 via the nacelle opening 40 while suspending the hydraulic motor 26 from above the main shaft 6. The process of lowering the hydraulic motor 26 by means of the component lifting and lowering mechanism 12 continues to transfer the hydraulic motor 26 to the transformer floor 50E via the tower opening 42A to 42D of each floor 50A to 50D. By providing a plurality of the hydraulic motors 26 and making each hydraulic motor 26 smaller as shown in FIG.2A to FIG.2C, it is possible to secure enough size of the nacelle opening 40 for the hydraulic motor 26, which requires frequent maintenance and replacement, to pass through, without excessively increasing the size of the nacelle 10.

Next, in the hydraulic motor 26 having been temporarily placed on the transformer floor 50E is now translated from the component lifting and lowering mechanism 12 installed in the nacelle 10 to the other component lifting and lowering mechanism 70 installed in the space inside the tower 8 above the transformer floor 50E. Then, the other component lifting and lowering mechanism 70 lowers the hydraulic motor 26 to the bottom part of the tower 8 via the floor opening 42E of the transformer floor 50E. The hydraulic motor 26 having reached the bottom part of the tower 8 is removed from the tower 8 through the tower opening 56 formed on the bottom part of the tower 8. Meanwhile, the hydraulic motor 26 may be removed from the tower 8 by the transportation rail 58 which is provided to penetrate the tower opening 56.

The hydraulic motor 26 can be transferred to the interior of the nacelle 10 in a sequence opposite to the sequence shown in FIG.6. More specifically, the hydraulic motor 26 may be brought into the interior of the nacelle 10 through the floor openings 42A to 42E and the nacelle opening 40 by the component lifting and lowering mechanisms 12 and 70 and then the hydraulic motor 26 may be placed on the device installation plate 11.

In the example shown in FIG.6, the hydraulic motor 26 is temporarily placed on the transformer floor 50E provided inside the tower 8, and translated from one of the component lifting and lowering mechanism 20 and the component lifting and lowering mechanism 70 to the other of the mechanisms 20 and 70. Above the transformer floor 50E, the hydraulic motor 26 is transferred by the component lifting and lowering mechanism 12 installed in the nacelle 10. Below the transformer floor 50E, the hydraulic motor 26 is transferred by the component lifting and lowering mechanism 70 arranged above the transformer floor 50E.

In this manner, the hydraulic motor 26 is temporarily placed on the transformer floor 50E provided in the tower 8 and the hydraulic motor 26 is then translated between the component lifting and lowering mechanism 12 installed in the nacelle 8 and the component lifting and lowering mechanism 70 arranged in the space inside the tower 8 above the transformer floor 50E. By this, it is possible to shorten the time required to transfer the component in the tower 8.

FIG.6 illustrates the exemplary case where the transformer floor 50E is used as a temporary placement floor for the hydraulic motor 26. However, this is not limitative and the hydraulic motor 26 may be temporarily placed on any one of the floors other than the transformer floor 50E and then translated between the component lifting and lowering mechanism 12 and the other component lifting and lowering mechanism installed in a space inside the tower 8 above the selected one of the floors which functions as the temporary placement floor.

In the component transferring method described in reference to FIG.6, by using the component lifting and lowering mechanism 12 installed in the nacelle 10 and the component lifting and lowering mechanism 70 installed in the tower 8, the transfer-object component 13 is transferred between the nacelle 10 and the exterior of the tower 8 through a path inside the wind turbine generator 1. Therefore, in the case of the offshore wind turbine generator which produces approximately 40% of annual energy production during a gust of wind speed 11m/s or higher, under severe environmental condition which makes it difficult for the crane vessel to access the wind turbine generator, such as wind speed and wave height, it is still possible to perform maintenance on the wind turbine generator. Therefore, the cost and time required to perform maintenance on the offshore wind turbine generator can be reduced significantly.

The transfer-object component 13 may be any component other than the hydraulic motor 26. For instance, the transfer-object component 13 may be components inside the nacelle 10 such as the hydraulic pump 24, the yaw mechanism 32, the generator 28, the main shaft bearing 20A, 20B, the piping forming the high-pressure oil line 25 and the low-pressure oil line 27, the oil cooler for cooling the operating oil, and the fan for ventilating the nacelle, or may be disassembled parts of the above components. The hydraulic pump 24 is formed with a cylinder block including a plurality of cylinders, pistons reciprocating in each of the cylinders, and a cam moving the pistons upward and downward. The cylinder block is separable into a plurality of segments and the transfer-object component 13 may be each of the segments of the cylinder block.

Alternatively, the transfer-object component 13 may be components inside the hub such as the actuator for adjusting the pitch angle of the blade 2 and a blade turning bearing of the hub to which the blade is attached, or may be disassembled parts of the above components.

In such a case that the transfer-object component 13 is a component provided inside the hub 4, by transferring the transfer-object component 13 between the interior of the hub 4 and the interior of the nacelle 10 to move the transfer-component 13 through the interior of the nacelle 10 once, the transfer-object component 13 can be transferred in and out of the tower in the sequence shown in FIG.6 in the manner similar to the case of transferring the component provided in the nacelle 10.

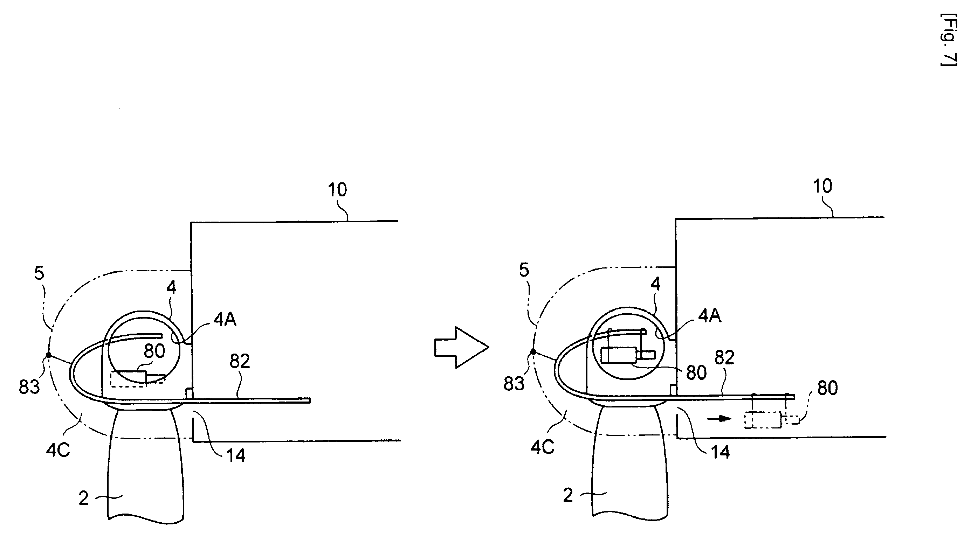

FIG.7 illustrates a process of transferring an actuator 80 provided inside the hub 4 for pitch drive to the interior of the nacelle 10. As shown in FIG.7, a transportation rail is first installed from the interior of the hub 4 to the interior of the nacelle 10 through a space 4C between the hub 4 and the hub cover 5 such as to penetrate through the first manhole 4B formed in the hub 4 (see FIG.2A) and the second manhole 14 formed in the wall of the nacelle 10. Meanwhile, the transportation rail 82 may be fixed to an inner wall of the hub cover 5 at a fixing point 83. Then, the actuator 80 inside the hub 4 is hoisted by means of a chain block and hooked on the transportation rail 82. Next, the actuator 80 is moved along the transportation rail 82 from the interior of the hub 4 through the space 4C to the interior of the nacelle 10 via the first manhole 4B and the second manhole 14. The actuator having reached the interior of the nacelle 10 is removed from the tower 8 in the sequence shown in FIG.6.

FIG.7 shows the example where the actuator 80 is transferred through the first manhole 4B formed in the hub 4 and the second manhole 14 formed in the wall of the nacelle 10. However, this is not limitative and in such a case that the transferring path of the actuator 80 is covered by the hub cover 5, another manhole may be formed in the hub cover 5.

According to the present embodiment, the component lifting and lowering mechanism 12 is configured to transfer the transfer-object component 13 from above the main shaft 6 while suspending the transfer-object component 13. Thus, the transferring operation can be further efficient by utilizing the space above the main shaft 6 in the nacelle 10, which comparatively has room. Further, the opening (the nacelle opening 40) is formed in the nacelle base plate 10B as a pathway of the transfer-object component 13. The opening is formed in at least a part of the area surrounded by the yaw bearing 30 and avoiding the main shaft 6. By this, it is possible to avoid the obstruction of the transfer-object component 13 by the main shaft 6 during transferring of the transfer-object component 13 between the interior of the nacelle 10 and the interior of the tower 8.

While the present invention has been described with reference to exemplary embodiments, it is obvious to those skilled in the art that various changes may be made without departing from the scope of the invention.

For instance, in the above exemplary embodiments, the wind turbine generator 1 is provided with the hydraulic transmission 22. However, this is not limitative and the present invention is applicable to a wind turbine generator which is provided with a step-up gear instead of the hydraulic transmission 22, or a wind turbine generator in which the main shaft is directly connected to the generator.

In the above exemplary embodiments, the transfer-object component 13 is placed temporarily on the temporary placement floor, e.g. the transformer floor 50E. However, this is not limitative and the transfer-object component may be transferred nonstop between the inside of the nacelle 10 and the bottom part of the tower 8 solely by the component lifting and lowering mechanism 12 installed inside the nacelle 10.

### Reference Signs List

1 WIND TURBINE GENERATOR
2 BLADE
3 ROTOR
4 HUB
4A BLADE ATTACHING HOLE
4B FIRST MANHOLE
4C SPACE
5 HUB COVER
6 MAIN SHAFT
8 TOWER
9 LADDER
10 NACELLE
10A NACELLE COVER
10B NACELLE BASE PLATE
10C NACELLE STRUCTURE
11 DEVICE INSTALLATION PLATE
12 COMPONENT LIFTING AND LOWERING MECHANISM
13 TRANSFER-OBJECT COMPONENT
14 SECOND MANHOLE
20A, 20B MAIN SHAFT BEARING
21A, 21B BEARING HOUSING
22 HYDRAULIC TRANSMISSION
24 HYDRAULIC PUMP
25 HIGH PRESSURE OIL LINE
26 HYDRAULIC MOTOR
27 LOW PRESSURE OIL LINE
28 GENERATOR
30 YAW BEARING
32 YAW TURNING MECHANISM
32A YAW MOTOR
32B PINION GEAR
40 NACELLE OPENING
40A FIRST OPENING PART
40B SECOND OPENING PART
42A to 42E FLOOR OPENING
44 LADDER OPENING
46 FLAP MEMBER
48 FLAP MEMBER
50A to 50D FLOOR
50E TRANSFORMER FLOOR
52 TRANSFORMER
53 TRANSFORMER COIL
54 CASING
56 TOWER OPENING
58 RAIL FOR TRANSPORTATION
60 CYLINDRICAL MEMBER
62 FLOOR PENETRATING MEMBER
64 COVERING MEMBER
70 COMPONENT LIFTING AND LOWERING MECHANISM (ANOTHER COMPONENT LIFTING AND LOWERING MECHANISM)
72 JIG
80 ACTUATOR FOR PITCH DRIVE
82 RAIL FOR TRANSPORTATION

## Claims

1. A wind turbine generator (1) **characterized in that** it comprises:
a blade (2);
a hub (4) on which the blade (2) is mounted;
a main shaft (6) which is coupled to the hub (4);
a nacelle (10) which houses at least the main shaft (6);
a tower (8) which supports the nacelle (10) via a yaw bearing (30); and
a component lifting and lowering mechanism (12) which is installed in the nacelle (10),
wherein the nacelle (10) has a nacelle opening (40) formed in a base plate (10B) of the nacelle in at least a part of an area which is surrounded by the yaw bearing (30) and above which the main shaft (6) does not extend,
wherein the nacelle opening (40) includes a first opening part (40A) and a second opening part (40B) on both sides of the main shaft (6), the first and second opening parts (40A, 40B) being arranged across a center axis (C) of the yaw bearing (30), and
wherein the component lifting and lowering mechanism (12) is configured to transfer a transfer-object component (13) between an interior of the nacelle (10) and an interior of the tower (8) via the nacelle opening (40) while suspending the transfer-object component (13) from above the main shaft (6).

2. The wind turbine generator (1) according to claim 1, further comprising:
a plurality of floors (50A to 50E) which are provided in the tower (8) and each of which has a floor opening (42A to 42E),
wherein the nacelle opening (40) includes a first opening part (40A) and a second opening part (40B) which are arranged across a center axis of the yaw bearing (30),
wherein the floor openings (42A to 42E) of the plurality of floors (50A to 50E) overlap with each other at least in a portion corresponding to a prescribed angular range of a circular or annular area which is formed around the center axis by a moving path of the first opening part (40A) and the second opening part (40B) during turning of the nacelle (10), and
wherein the component lifting and lowering mechanism (12) is configured to transfer the transfer-object component (13) vertically in the tower (8) via the floor openings while suspending the transfer-object component from above the main shaft (6).

3. The wind turbine generator (1) according to claim 1 or claim 2, further comprising:
a hydraulic pump (24) which is housed in the nacelle (10) and which is driven by the main shaft (6) to produce pressure oil;
a plurality of hydraulic motors (26) which are housed in the nacelle (10) and which are driven by the pressure oil; and
a generator (28) which is driven by the hydraulic motors (26),
wherein the nacelle opening (40) is large enough to allow at least each of the hydraulic motors (26) to pass through.

4. The wind turbine generator (1) according to claim 1, further comprising:
a hydraulic pump (24) which is housed in the nacelle (10) and which is driven by the main shaft (6) to produce pressure oil;
a plurality of hydraulic motors (26) which are housed in the nacelle (10) and which are driven by the pressure oil;
a generator (28) which is driven by the hydraulic motors (26); and
an oil pan floor (50A) which is provided in the tower (8) and which has an oil pan opening (42A), the oil pan opening being closable,
wherein the oil pan opening (42A) is provided in a projected part of the oil pan floor (50A).

5. The wind turbine generator (1) according to claim 4,
wherein the nacelle opening (40) includes a first opening part (40A) and a second opening part (40B) which are arranged across a center axis of the yaw bearing (30),
wherein the oil pan opening (42A) is arranged at least in a portion corresponding to a prescribed angular range of a circular or annular area which is formed around the center axis by a moving path of the first opening part and the second opening part during turning of the nacelle (10), and
wherein the component lifting and lowering mechanism (12) is configured to transfer the transfer-object component (13) vertically in the tower (8) via the oil pan opening (42A) while suspending the transfer-object component (13) from above the main shaft (6).

6. The wind turbine generator (1) according to any one of the preceding claims, wherein the component lifting and lowering mechanism (12) is one of a traveling crane, a jib crane and a winch.

7. A component transferring method for a wind turbine generator (1) which comprises a blade (2), a hub (4) on which the blade (2) is mounted, a main shaft (6) which is coupled to the hub (4), a nacelle (10) which houses at least the main shaft (6), and a tower (8) which supports the nacelle (10) via a yaw bearing (30), the method being **characterized in that** it comprises:
a first transferring step of transferring a transfer-object component (13) between an interior of the nacelle (10) and an interior of the tower (8) by a component lifting and lowering mechanism (12) via a nacelle opening (40), during which said transfer-object component (13) is suspended from above the main shaft (6) by the component lifting and lowering mechanism (12) while avoiding obstruction of the transfer of the transfer-object component (13) by the main shaft, the nacelle opening (40) being formed in a base plate (10B) of the nacelle (10) in at least a part of an area which is surrounded by the yaw bearing (30) and above which the main shaft (6) does not extend, the component lifting and lowering mechanism (12) being installed in the nacelle (10),
wherein the nacelle opening (40) includes a first opening part (40A) and a second opening part (40B) on both sides of the main shaft (6), the first and second opening parts (40A, 40B) being arranged across a center axis (C) of the yaw bearing (30),.

8. The component transferring method for the wind turbine generator (1) according to claim 7, further comprising:
a second transferring step of transferring the transfer-object component (13) vertically in the tower,
wherein the nacelle opening (40) includes a first opening part (40A) and a second opening part (40B) which are arranged across a center axis of the yaw bearing (30),
wherein a plurality of floors (50A to 50E) are provided in the tower, each of the floors having a floor opening (42A to 42E),
wherein the floor openings of the plurality of floors overlap with each other at least in a portion corresponding to a prescribed angular range of a circular or annular area which is formed around the center axis by a moving path of the first opening part (40A) and the second opening part (40B) during turning of the nacelle (10), and
wherein, in the second transferring step, the transfer-object component (13) is transferred by the component lifting and lowering mechanism (12) vertically in the tower (8) via the floor openings (42A to 42E) while being suspended from above the main shaft (6) by the component lifting and lowering mechanism (12).

9. The component transferring method for the wind turbine generator (1) according to claim 7 or claim 8, further comprising:
a third transferring step of transferring the transfer-object component (13) between an interior of the hub (4) and the interior of the nacelle (10).

10. The component transferring method for the wind turbine generator (1) according to claim 9,
wherein the transfer-object component (13) is transferred between the interior of the hub (4) and the interior of the nacelle (10) via a first manhole (4B) formed in the hub (4), a space (4C) between the hub and a hub cover (5) covering the hub and a second manhole (14) formed in a wall of the nacelle.

11. The component transferring method for the wind turbine generator (1) according to claim 10, further comprising:
a step of installing a rail (82) for transportation from the interior of the hub (4) to the interior of the nacelle (10) via the space (4C) so as to pass through the first manhole (4B) and the second manhole (14),
wherein the transfer-object component (13) is transferred between the interior of the hub (4) and the interior of the nacelle (10) using the rail (82) for transportation.

12. The component transferring method for the wind turbine generator (1) according to claim 7, further comprising:
a second transferring step of transferring the transfer-object component (13) vertically in the tower (8);
a step of temporarily placing the transfer-object component (13) on a temporary placement floor which is provided in the tower (8); and
a step of translating the transfer-object component between the component lifting and lowering mechanism (12) installed in the nacelle (10) and another component lifting and lowering mechanism (70) installed in a space inside the tower (8) above the temporary placement floor while temporarily placing the transfer-object component on the temporary placement floor,
wherein, in the second transferring step, the transfer-object component (13) is transferred by the component lifting and lowering mechanism (12) installed in the nacelle (10) above the temporary placement floor and is transferred by said another component lifting and lowering mechanism (70) below the temporary placement floor.

13. The component transferring method for the wind turbine generator (1) according to claim 12,
wherein the temporary placement floor is a transformer floor (50E) where a transformer (52) is installed, and
wherein said another component lifting and lowering mechanism (70) is used to transfer a transformer coil (53) of the transformer (52).

14. The component transferring method for the wind turbine generator (1) according to claim 13, further comprising:
a step of transferring the transformer coil (53) between atop the transformer floor (50E) and an interior of a transformer casing (54) while suspending the transformer coil (53) by said another component lifting and lowering mechanism (70);
a step of adjusting an orientation of the transformer coil (53) over the transformer floor (50E); and
a step of transferring the transformer coil (53) between atop the transformer floor (50E) and a bottom part of the tower (8) while suspending the transformer coil by said another component lifting and lowering mechanism (70).

15. The component transferring method for the wind turbine generator (1) according to any one of claims 7 to 14, further comprising:
a fourth transferring step of transferring the transfer-object component (13) between the interior of the tower (8) and an exterior of the tower via a tower opening (56) which is formed on a bottom part of the tower.

16. The component transferring method for the wind turbine generator (1) according to claim 15,
wherein, in the fourth transferring step, the transfer-object component (13) is transferred using a rail (58) for transportation extending from the interior of the tower (8) to the exterior of the tower via the tower opening (56).

## Patentansprüche

1. Windturbinengenerator (1), **dadurch gekennzeichnet, dass** er umfasst:
einen Flügel (2),
eine Nabe (4), an der der Flügel (2) montiert ist,
eine Hauptwelle (6), die mit der Nabe (4) gekoppelt ist,
eine Gondel (10), in der mindestens die Hauptwelle (6) untergebracht ist,
einen Mast (8), der die Gondel (10) über ein Turmlager (30) stützt, und
einen Komponentenhebe- und -absenkmechanismus (12), der in der Gondel (10) installiert ist,
wobei die Gondel (10) eine Gondelöffnung (40) hat, die in einer Grundplatte (10B) der Gondel in mindestens einem Teil eines Bereichs angeordnet ist, der von dem Turmlager (30) umgeben ist und oberhalb dessen die Hauptwelle (6) nicht verläuft,
wobei die Gondelöffnung (40) einen ersten Öffnungsteil (40A) und einen zweiten Öffnungsteil (40B) auf beiden Seiten der Hauptwelle (6) enthält, wobei der erste und der zweite Öffnungsteil (40A, 40B) quer zu einer Mittelachse (C) des Turmlagers (30) angeordnet sind, und
wobei der Komponentenhebe- und -absenkmechanismus (12) dafür konfiguriert ist, eine Transferobjektkomponente (13) zwischen einem Inneren der Gondel (10) und einem Inneren des Masten (8) über die Gondelöffnung (40) zu transferieren, während die Transferobjektkomponente (13) von oberhalb der Hauptwelle (6) aufgehängt ist.

2. Windturbinengenerator (1) nach Anspruch 1, ferner umfassend:
mehrere Böden (50A bis 50E), die in dem Mast (8) angeordnet sind und von denen jeder eine Bodenöffnung (42A bis 42E) aufweist,
wobei die Gondelöffnung (40) einen ersten Öffnungsteil (40A) und einen zweiten Öffnungsteil (40B) enthält, die quer zu einer Mittelachse des Turmlagers (30) angeordnet sind,
wobei die Bodenöffnungen (42A bis 42E) der mehreren Böden (50A bis 50E) einander mindestens in einem Abschnitt überlappen, der einem vorgeschriebenen Winkelbereich eines kreisförmigen oder ringförmigen Bereichs entspricht, der um die Mittelachse herum durch einen Bewegungspfad des ersten Öffnungsteils (40A) und des zweiten Öffnungsteils (40B) während eines Drehens der Gondel (10) gebildet wird, und
wobei der Komponentenhebe- und -absenkmechanismus (12) dafür konfiguriert ist, die Transferobjektkomponente (13) vertikal in dem Mast (8) über die Bodenöffnungen zu transferieren, während die Transferobjektkomponente von oberhalb der Hauptwelle (6) aufgehängt ist.

3. Windturbinengenerator (1) nach Anspruch 1 oder Anspruch 2, ferner umfassend:
eine Hydraulikpumpe (24), die in der Gondel (10) untergebracht ist und die durch die Hauptwelle (6) angetrieben wird, um Drucköl zu erzeugen,
mehrere Hydraulikmotoren (26), die in der Gondel (10) untergebracht sind und die durch das Drucköl angetrieben werden, und
einen Generator (28), der durch die Hydraulikmotoren (26) angetrieben wird,
wobei die Gondelöffnung (40) groß genug ist, um mindestens jeden der Hydraulikmotoren (26) dort hindurch führen zu können.

4. Windturbinengenerator (1) nach Anspruch 1, ferner umfassend:
eine Hydraulikpumpe (24), die in der Gondel (10) untergebracht ist und die durch die Hauptwelle (6) angetrieben wird, um Drucköl zu erzeugen,
mehrere Hydraulikmotoren (26), die in der Gondel (10) untergebracht sind und die durch das Drucköl angetrieben werden,
einen Generator (28), der durch die Hydraulikmotoren (26) angetrieben wird, und
einen Ölwannenboden (50A), der in dem Mast (8) angeordnet ist und der eine Ölwannenöffnung (42A) hat, wobei die Ölwannenöffnung verschließbar ist,
wobei die Ölwannenöffnung (42A) in einem hervorstehenden Teil des Ölwannenbodens (50A) angeordnet ist.

5. Windturbinengenerator (1) nach Anspruch 4,
wobei die Gondelöffnung (40) einen ersten Öffnungsteil (40A) und einen zweiten Öffnungsteil (40B) enthält, die quer zu einer Mittelachse des Turmlagers (30) angeordnet sind,
wobei die Ölwannenöffnung (42A) mindestens in einem Abschnitt angeordnet ist, der einem vorgeschriebenen Winkelbereich eines kreisförmigen oder ringförmigen Bereichs entspricht, die ist, der um die Mittelachse herum durch einen Bewegungspfad des ersten Öffnungsteils und des zweiten Öffnungsteils während eines Drehens der Gondel (10) gebildet wird, und
wobei der Komponentenhebe- und -absenkmechanismus (12) dafür konfiguriert ist, die Transferobjektkomponente (13) vertikal in dem Mast (8) über die Ölwannenöffnung (42A) zu transferieren, während die Transferobjektkomponente (13) von oberhalb der Hauptwelle (6) aufgehängt ist.

6. Windturbinengenerator (1) nach einem der vorangehenden Ansprüche,
wobei der Komponentenhebe- und -absenkmechanismus (12) ein Laufkran oder ein Auslegerkran oder eine Winde ist.

7. Komponententransferverfahren für einen Windturbinengenerator (1), der umfasst: einen Flügel (2), eine Nabe (4), an der der Flügel (2) montiert ist, eine Hauptwelle (6), die mit der Nabe (4) gekoppelt ist, eine Gondel (10), in der mindestens die Hauptwelle (6) untergebracht ist, und einen Mast (8), der die Gondel (10) über ein Turmlager (30) stützt, wobei das Verfahren **dadurch gekennzeichnet ist, dass** es umfasst:
einen ersten Transferschritt zum Transferieren einer Transferobjektkomponente (13) zwischen einem Inneren der Gondel (10) und einem Inneren des Masten (8) durch einen Komponentenhebe- und -absenkmechanismus (12) über eine Gondelöffnung (40), während die Transferobjektkomponente (13) von oberhalb der Hauptwelle (6) durch den Komponentenhebe- und -absenkmechanismus (12) aufgehängt ist, während eine Behinderung des Transfers der Transferobjektkomponente (13) durch die Hauptwelle vermieden wird, wobei die Gondelöffnung (40) in einer Grundplatte (10B) der Gondel (10) in mindestens einem Teil eines Bereichs ausgebildet ist, der von dem Turmlager (30) umgeben ist und oberhalb dessen die Hauptwelle (6) nicht verläuft, wobei der Komponentenhebe- und -absenkmechanismus (12) in der Gondel (10) installiert ist, wobei die Gondelöffnung (40) einen ersten Öffnungsteil (40A) und einen zweiten Öffnungsteil (40B) auf beiden Seiten der Hauptwelle (6) enthält, wobei die ersten und die zweiten Öffnungsteile (40A, 40B) quer zu einer Mittelachse (C) des Turmlagers (30) angeordnet sind.

8. Komponententransferverfahren für einen Windturbinengenerator (1) nach Anspruch 7, ferner umfassend:
einen zweiten Transferschritt zum Transferieren der Transferobjektkomponente (13) vertikal in dem Mast,
wobei die Gondelöffnung (40) einen ersten Öffnungsteil (40A) und einen zweiten Öffnungsteil (40B) enthält, die quer zu einer Mittelachse des Turmlagers (30) angeordnet sind,
wobei mehrere Böden (50A bis 50E) in dem Mast angeordnet sind, wobei jeder der Böden eine Bodenöffnung (42A bis 42E) aufweist,
wobei die Bodenöffnungen der mehreren Böden einander mindestens in einem Abschnitt überlappen, der einem vorgeschriebenen Winkelbereich eines kreisförmigen oder ringförmigen Bereichs entspricht, die um die Mittelachse herum durch einen Bewegungspfad des ersten Öffnungsteils (40A) und des zweiten Öffnungsteils (40B) während eines Drehens der Gondel (10) gebildet wird, und
wobei in dem zweiten Transferschritt die Transferobjektkomponente (13) durch den Komponentenhebe- und -absenkmechanismus (12) vertikal in dem Mast (8) über die Bodenöffnungen (42A bis 42E) transferiert wird, während sie von oberhalb der Hauptwelle (6) durch den Komponentenhebe- und -absenkmechanismus (12) aufgehängt ist.

9. Komponententransferverfahren für einen Windturbinengenerator (1) nach Anspruch 7 oder Anspruch 8, ferner umfassend:
einen dritten Transferschritt zum Transferieren der Transferobjektkomponente (13) zwischen einem Inneren der Nabe (4) und dem Inneren der Gondel (10).

10. Komponententransferverfahren für einen Windturbinengenerator (1) nach Anspruch 9,
wobei die Transferobjektkomponente (13) zwischen dem Inneren der Nabe (4) und dem Inneren der Gondel (10) über ein erstes Einstiegsloch (4B), das in der Nabe (4) ausgebildet ist, einen Raum (4C) zwischen der Nabe und einer Nabenabdeckung (5), die die Nabe bedeckt, und ein zweites Einstiegsloch (14), das in einer Wand der Gondel ausgebildet ist, transferiert wird.

11. Komponententransferverfahren für einen Windturbinengenerator (1) nach Anspruch 10, ferner umfassend:
einen Schritt zum Installieren einer Schiene (82) für den Transport aus dem Inneren der Nabe (4) in das Innere der Gondel (10) über den Raum (4C), dergestalt, dass sie durch das erste Einstiegsloch (4B) und das zweite Einstiegsloch (14) hindurch verläuft,
wobei die Transferobjektkomponente (13) zwischen dem Inneren der Nabe (4) und dem Inneren der Gondel (10) unter Verwendung der Schiene (82) für den Transport transferiert wird.

12. Komponententransferverfahren für einen Windturbinengenerator (1) nach Anspruch 7, ferner umfassend:
einen zweiten Transferschritt zum Transferieren der Transferobjektkomponente (13) vertikal in dem Mast (8),
einen Schritt zum vorübergehenden Absetzen der Transferobjektkomponente (13) auf einem zeitweiligen Absetzboden, der in dem Mast (8) angeordnet ist, und
einen Schritt zum Translatieren der Transferobjektkomponente zwischen dem in der Gondel (10) installierten Komponentenhebe- und -absenkmechanismus (12) und einem weiteren Komponentenhebe- und -absenkmechanismus (70), der in einem Raum im Inneren des Masten (8) über dem zeitweiligen Absetzboden installiert ist, während die Transferobjektkomponente zeitweilig auf dem zeitweiligen Absetzboden abgesetzt wird,
wobei, in dem zweiten Transferschritt, die Transferobjektkomponente (13) durch den in der Gondel (10) installierten Komponentenhebe- und -absenkmechanismus (12) über dem zeitweiligen Absetzboden transferiert wird und durch den weiteren Komponentenhebe- und -absenkmechanismus (70) unter dem zeitweiligen Absetzboden transferiert wird.

13. Komponententransferverfahren für einen Windturbinengenerator (1) nach Anspruch 12,
wobei der zeitweilige Absetzboden ein Transformatorboden (50E) ist, wobei ein Transformator (52) installiert ist, und
wobei der weitere Komponentenhebe- und -absenkmechanismus (70) dafür verwendet wird, eine Transformatorspule (53) des Transformators (52) zu transferieren.

14. Komponententransferverfahren für einen Windturbinengenerator (1) nach Anspruch 13, ferner umfassend:
einen Schritt zum Transferieren der Transformatorspule (53) zwischen der Oberseite des Transformatorbodens (50E) und einem Inneren eines Transformatorgehäuses (54), während die Transformatorspule (53) an dem weiteren Komponentenhebe- und -absenkmechanismus (70) aufgehängt ist,
einen Schritt zum Justieren einer Ausrichtung der Transformatorspule (53) über dem Transformatorboden (50E), und
einen Schritt zum Transferieren der Transformatorspule (53) zwischen der Oberseite des Transformatorbodens (50E) und einem unteren Teil des Masten (8), während die Transformatorspule an dem weiteren Komponentenhebe- und -absenkmechanismus (70) aufgehängt ist.

15. Komponententransferverfahren für einen Windturbinengenerator (1) nach einem der Ansprüche 7 bis 14, ferner umfassend:
einen vierten Transferschritt zum Transferieren der Transferobjektkomponente (13) zwischen dem Inneren des Masten (8) und einem Äußeren des Masten über eine Mastöffnung (56), die in einem unteren Teil des Masten ausgebildet ist.

16. Komponententransferverfahren für einen Windturbinengenerator (1) nach Anspruch 15,
wobei, in dem vierten Transferschritt, die Transferobjektkomponente (13) unter Verwendung einer Schiene (58) für den Transport transferiert wird, die sich vom Inneren des Masten (8) zur Außenseite des Masten über die Mastöffnung (56) erstreckt.

## Revendications

1. Eolienne (1) **caractérisée en ce qu'**elle comprend :
une pale (2) ;
un moyeu (4) sur lequel la pale (2) est montée ;
un arbre principal (6) qui est relié au moyeu (4) ;
une nacelle (10) qui renferme au moins l'arbre principal (6) ;
une tour (8) qui supporte la nacelle (10) par l'intermédiaire d'un palier de lacet (30) ; et
un mécanisme de soulèvement et d'abaissement de composant (12) qui est installé dans la nacelle (10),
dans laquelle la nacelle (10) a une ouverture de nacelle (40) formée dans une plaque de base (10B) de la nacelle dans au moins une partie d'une zone qui est entourée par le palier de lacet (30) et au-dessus de laquelle l'arbre principal (6) ne s'étend pas,
dans laquelle l'ouverture de nacelle (40) comprend une première partie d'ouverture (40A) et une deuxième partie d'ouverture (40B) des deux côtés de l'arbre principal (6), les première et deuxième parties d'ouverture (40A, 40B) étant disposées de part et d'autre d'un axe central (C) du palier de lacet (30), et
dans laquelle le mécanisme de soulèvement et d'abaissement de composant (12) est configuré pour transférer un composant d'objet de transfert (13) entre un intérieur de la nacelle (10) et un intérieur de la tour (8) en passant par l'ouverture de nacelle (40) tout en suspendant le composant d'objet de transfert (13) par au-dessus de l'arbre principal (6).

2. Eolienne (1) selon la revendication 1, comprenant en outre :
une pluralité de planchers (50A à 50E) qui sont prévus dans la tour (8) et dont chacun a une ouverture de plancher (42A à 42E),
dans laquelle l'ouverture de nacelle (40) comprend une première partie d'ouverture (40A) et une deuxième partie d'ouverture (40B) qui sont disposées de part et d'autre d'un axe central du palier de lacet (30),
dans laquelle les ouvertures de plancher (42A à 42E) de la pluralité de planchers (50A à 50E) se chevauchent l'une l'autre au moins dans une partie correspondant à une plage angulaire prescrite d'une zone circulaire ou annulaire qui est formée autour de l'axe central par une trajectoire de déplacement de la première partie d'ouverture (40A) et de la deuxième partie d'ouverture (40B) pendant la rotation de la nacelle (10), et
dans laquelle le mécanisme de soulèvement et d'abaissement de composant (12) est configuré pour transférer le composant d'objet de transfert (13) verticalement dans la tour (8) en passant par les ouvertures de plancher tout en suspendant le composant d'objet de transfert par au-dessus de l'arbre principal (6).

3. Eolienne (1) selon la revendication 1 ou la revendication 2, comprenant en outre :
une pompe hydraulique (24) qui est logée dans la nacelle (10) et qui est entraînée par l'arbre principal (6) afin de produire de l'huile sous pression ;
une pluralité de moteurs hydrauliques (26) qui sont logés dans la nacelle (10) et qui sont entraînés par l'huile sous pression ; et
une génératrice (28) qui est entraînée par les moteurs hydrauliques (26),
dans laquelle l'ouverture de nacelle (40) est suffisamment grande pour permettre au moins à chacun des moteurs hydrauliques (26) de passer à travers.

4. Eolienne (1) selon la revendication 1, comprenant en outre :
une pompe hydraulique (24) qui est logée dans la nacelle (10) et qui est entraînée par l'arbre principal (6) pour produire de l'huile sous pression ;
une pluralité de moteurs hydrauliques (26) qui sont logés dans la nacelle (10) et qui sont entraînés par l'huile sous pression ;
une génératrice (28) qui sont entraînés par les moteurs hydrauliques (26) ; et
un plancher de bac à huile (50A) qui est prévu dans la tour (8) et qui a une ouverture de bac à huile (42A), l'ouverture de bac à huile pouvant être fermée,
dans laquelle l'ouverture de bac à huile (42A) est prévue dans une partie saillante du plancher de bac à huile (50A).

5. Eolienne (1) selon la revendication 4,
dans laquelle l'ouverture de nacelle (40) comprend une première partie d'ouverture (40A) et une deuxième partie d'ouverture (40B) qui sont disposées de part et d'autre d'un axe central du palier de lacet (30),
dans laquelle l'ouverture de bac à huile (42A) est prévue au moins dans une partie correspondant à une plage angulaire prescrite d'une zone circulaire ou annulaire qui est formée autour de l'axe central par une trajectoire de déplacement de la première partie d'ouverture et de la deuxième partie d'ouverture pendant la rotation de la nacelle (10), et
dans laquelle le mécanisme de soulèvement et d'abaissement de composant (12) est configuré pour transférer le composant d'objet de transfert (13) verticalement dans la tour (8) en passant par l'ouverture de bac à huile (42A) tout en suspendant le composant d'objet de transfert (13) par au-dessus de l'arbre principal (6).

6. Eolienne (1) selon l'une quelconque des revendications précédentes, dans laquelle le mécanisme de soulèvement et d'abaissement de composant (12) est choisi parmi une grue à déplacement, une grue à potence et un treuil.

7. Procédé de transfert de composant pour une éolienne (1) qui comprend une pale (2), un moyeu (4) sur lequel la pale (2) est montée, un arbre principal (6) qui est relié au moyeu (4), une nacelle (10) qui renferme au moins l'arbre principal (6), et une tour (8) qui supporte la nacelle (10) par l'intermédiaire d'un palier de lacet (30), le procédé étant **caractérisé en ce qu'**il comprend :
une première étape de transfert destinée à transférer un composant d'objet de transfert (13) entre un intérieur de la nacelle (10) et un intérieur de la tour (8) grâce à un mécanisme de soulèvement et d'abaissement de composant (12) en passant par une ouverture de nacelle (40), pendant laquelle ledit composant d'objet de transfert (13) est suspendu par au-dessus de l'arbre principal (6) par le mécanisme de soulèvement et d'abaissement de composant (12) tout en évitant une obstruction du transfert du composant d'objet de transfert (13) par l'arbre principal, l'ouverture de nacelle (40) étant formée dans une plaque de base (10B) de la nacelle (10) dans au moins une partie d'une zone qui est entourée par le palier de lacet (30) et au-dessus de laquelle l'arbre principal (6) ne s'étend pas, le mécanisme de soulèvement et d'abaissement de composant (12) étant installé dans la nacelle (10),
dans lequel l'ouverture de nacelle (40) comprend une première partie d'ouverture (40A) et une deuxième partie d'ouverture (40B) des deux côtés de l'arbre principal (6), les première et deuxième parties d'ouverture (40A, 40B) étant disposées de part et d'autre d'un axe central (C) du palier de lacet (30).

8. Procédé de transfert de composant pour l'éolienne (1) selon la revendication 7, comprenant en outre :
une deuxième étape de transfert destinée à transférer le composant d'objet de transfert (13) verticalement dans la tour,
dans lequel l'ouverture de nacelle (40) comprend une première partie d'ouverture (40A) et une deuxième partie d'ouverture (40B) qui sont disposées de part et d'autre d'un axe central du palier de lacet (30),
dans lequel une pluralité de planchers (50A à 50E) est prévue dans la tour, chacun des planchers ayant une ouverture de plancher (42A à 42E),
dans lequel les ouvertures de plancher de la pluralité de planchers se chevauchent l'une l'autre au moins dans une partie correspondant à une plage angulaire prescrite d'une zone circulaire ou annulaire qui est formée autour de l'axe central par une trajectoire de déplacement de la première partie d'ouverture (40A) et de la deuxième partie d'ouverture (40B) pendant la rotation de la nacelle (10), et
dans lequel, dans la deuxième étape de transfert, le composant d'objet de transfert (13) est transféré par le mécanisme de soulèvement et d'abaissement de composant (12) verticalement dans la tour (8) en passant par les ouvertures de plancher (42A à 42E) tout en étant suspendu par au-dessus de l'arbre principal (6) par le mécanisme de soulèvement et d'abaissement de composant (12).

9. Procédé de transfert de composant pour l'éolienne (1) selon la revendication 7 ou la revendication 8, comprenant en outre :
une troisième étape de transfert destinée à transférer le composant d'objet de transfert (13) entre un intérieur du moyeu (4) et l'intérieur de la nacelle (10).

10. Procédé de transfert de composant pour l'éolienne (1) selon la revendication 9,
dans lequel le composant d'objet de transfert (13) est transféré entre l'intérieur du moyeu (4) et l'intérieur de la nacelle (10) via un premier trou d'homme (4B) formé dans le moyeu (4), un espace (4C) entre le moyeu et un capot de moyeu (5) recouvrant le moyeu et un deuxième trou d'homme (14) formé dans une paroi de la nacelle.

11. Procédé de transfert de composant pour l'éolienne (1) selon la revendication 10, comprenant en outre :
une étape d'installation d'un rail (82) pour le transport depuis l'intérieur du moyeu (4) jusqu'à l'intérieur de la nacelle (10) via l'espace (4C) de façon à passer à travers le premier trou d'homme (4B) et le deuxième trou d'homme (14),
dans lequel le composant d'objet de transfert (13) est transféré entre l'intérieur du moyeu (4) et l'intérieur de la nacelle (10) en utilisant le rail (82) pour le transport.

12. Procédé de transfert de composant pour l'éolienne (1) selon la revendication 7, comprenant en outre :
une deuxième étape de transfert destinée à transférer le composant d'objet de transfert (13) verticalement dans la tour (8) ;
une étape de mise en place temporaire du composant d'objet de transfert (13) sur un plancher d'emplacement provisoire qui est prévu dans la tour (8) ; et
une étape de translation du composant d'objet de transfert entre le mécanisme de soulèvement et d'abaissement de composant (12) installé dans une nacelle (10) et un autre mécanisme de soulèvement et d'abaissement de composant (70) installé dans un espace à l'intérieur de la tour (8) au-dessus du plancher d'emplacement provisoire tout en mettant temporairement en place le composant d'objet de transfert sur le plancher d'emplacement provisoire,
dans lequel, dans la deuxième étape de transfert, le composant d'objet de transfert (13) est transféré par le mécanisme de soulèvement et d'abaissement de composant (12) installé dans la nacelle (10) au-dessus du plancher d'emplacement provisoire et est transféré par ledit autre mécanisme de soulèvement et d'abaissement de composant (70) au-dessous du plancher d'emplacement provisoire.

13. Procédé de transfert de composant pour l'éolienne (1) selon la revendication 12,
dans lequel le plancher d'emplacement provisoire est un plancher de transformateur (50E) où un transformateur (52) est installé, et
dans lequel ledit autre mécanisme de soulèvement et d'abaissement de composant (70) est utilisé pour transférer une bobine de transformateur (53) du transformateur (52).

14. Procédé de transfert de composant pour l'éolienne (1) selon la revendication 13, comprenant en outre :
une étape de transfert de la bobine de transformateur (53) entre au-dessus du plancher de transformateur (50E) et un intérieur d'un logement de transformateur (54) tout en suspendant la bobine de transformateur (53) par ledit autre mécanisme de soulèvement et d'abaissement de composant (70) ;
une étape d'ajustement d'une orientation de la bobine de transformateur (53) au-dessus du plancher de transformateur (50E) ; et
une étape de transfert de la bobine de transformateur (53) entre au-dessus du plancher de transformateur (50E) et une partie inférieure de la tour (8) tout en suspendant la bobine de transformateur par ledit autre mécanisme de soulèvement et d'abaissement de composant (70).

15. Procédé de transfert de composant pour l'éolienne (1) selon l'une quelconque des revendications 7 à 14, comprenant en outre :
une quatrième étape de transfert destinée à transférer le composant d'objet de transfert (13) entre l'intérieur de la tour (8) et un extérieur de la tour en passant par une ouverture de tour (56) qui est formée sur une partie inférieure de la tour.

16. Procédé de transfert de composant pour l'éolienne (1) selon la revendication 15,
dans lequel, dans la quatrième étape de transfert, le composant d'objet de transfert (13) est transféré en utilisant un rail (58) pour le transport s'étendant depuis l'intérieur de la tour (8) jusqu'à l'extérieur de la tour en passant par l'ouverture de tour (56).
